**Europäisches Patentamt**

**European Patent Office**

**Office européen des brevets**

(19)

(11) Veröffentlichungsnummer : **0 340 819 B1**

(12) ## EUROPÄISCHE PATENTSCHRIFT

(45) Veröffentlichungstag der Patentschrift :
**24.06.92 Patentblatt 92/26**

(21) Anmeldenummer : **89200912.7**

(22) Anmeldetag : **12.04.89**

(51) Int. Cl.⁵ : **C07F 1/02,** // C07C35/08,
C07C29/40

(30) Priorität : **04.05.88 DE 3815166**

(43) Veröffentlichungstag der Anmeldung :
**08.11.89 Patentblatt 89/45**

(45) Bekanntmachung des Hinweises auf die
Patenterteilung :
**24.06.92 Patentblatt 92/26**

(84) Benannte Vertragsstaaten :
**CH DE FR GB IT LI NL**

(54) Synthesemittel für lithiumorganische Reaktionen.

(56) Entgegenhaltungen :
**DE-A- 3 637 780**
**US-A- 3 087 896**

(73) Patentinhaber : **METALLGESELLSCHAFT AG**
**Reuterweg 14 Postfach 3724**
**W-6000 Frankfurt/M.1 (DE)**

(72) Erfinder : **Deberitz, Jürgen, Dr.**
**Robert-Blum-Strasse 10**
**W-6000 Frankfurt am Main 60 (DE)**
Erfinder : **Weiss, Wilfried, Dr.**
**Auf der Entenweide 11**
**W-6370 Oberursel (DE)**

## Beschreibung

Die Erfindung betrifft ein Synthesemittel für lithiumorganische Reaktionen auf Basis einer Mischung aus lithiumorganischer Verbindung und pulverförmigem, inertem, anorganischem Trägerstoff.

Lithiumorganische Verbindungen spielen in der präparativen organischen Chemie eine bedeutende Rolle, um Lithium oder einen organischen Substituenten in eine organische Verbindung einzuführen. Die lithiumorganischen Verbindungen sind im allgemeinen luft- und feuchtigkeitsempfindlich und daher nur unter Vorsichtsmaßnahmen zu handhaben. Beispielsweise ist Butyllithium eine selbstentzündliche, hydrolyseempfindliche Flüssigkeit. Butyllithium wird daher üblicherweise in 15 bis 25 %igen Lösungen in z.B. Alkanen oder in etwa 30 %igen Paraffinsuspensionen gehandhabt (Römpp Chemie Lexikon, 8. Aufl., 1979, Seite 547). Methyllithium und Ethyllithium sind im Gegensatz zu ihren höheren Homologen in gesättigten und ungesättigten Kohlenwasserstoffen nicht oder kaum löslich, als Feststoffe jedoch in hohem Maße pyrophor und daher schwierig handhabbar.

Zur Verminderung der Nachteile von Lösungen magnesiumorganischer und lithiumorganischer Verbindungen ist es aus DE-OS 36 37 780 bekannt, pulverförmige Gemische aus Tonstaub und Lösungen magnesium- bzw. lithiumorganischer Verbindungen herzustellen. Die erhaltenen Pulver sind zwar weniger hydrolyseempfindlich, sind jedoch im Falle insbesondere der lithiumorganischen Verbindung pyrophor. Um den pyrophoren Charakter zu vermindern, sind unzweckmäßig hohe Tongehalte erforderlich, die in organischen Synthesen als unerwünschte Ballaststoffe und als Sorbentien wirken. Aus Sicherheitsvorschriften für die Handhabung von Butyllithium ist es ferner bekannt, auslaufendes Material zur Brandbekämpfung mit pulverförmigem Kalkstein zu behandeln. Es ist desweiteren aus "Synthesis" (1983), Seite 387, bekannt, komplexe anorganische Hydride durch Aufbringen auf Silikagel bzw. Aluminiumoxid zu modifizieren.

Aus der US-A-3 087 896 ist es bekannt, in Kohlenwasserstoffen leicht lösliche Alkyllithiumverbindungen (vgl. Spalte 3, Zeilen 20 - 32), z.B.Butyllithium oder Amyllithium, mit halbfesten oder festen Paraffinen zu stabilen, nicht pyrophoren Präparaten zu vermischen.

Die Synthese von Methyl- oder Ethyllithium erfolgt in an sich bekannter Weise, Methyllithium in Diethylether oder Tetrahydrofuran und Ethyllithium in Hexan, durch Umsetzung von metallischem Lithium und Alkylhalogenid gemäß der Formel:

$$R \, Hal + 2 \, Li \rightarrow R \, Li + Li \, Hal.$$

Lithiummethyl besitzt die beste Löslichkeit in Diethylether, worin es zu etwa 5 % löslich ist. Lösungen von Ethyllithium sind etwa 2%ig. Die Beschränkung auf Diethylether als Lösungsmittel schmälert jedoch den Einsatz dieser Verbindung, weil viele Anwender den Gebrauch von Diethylether im industriellen Maßstab wegen des hohen Dampfdrucks und der Peroxidbildung beim Einengen scheuen und nach Möglichkeit zu umgehen versuchen. Ferner weisen die Lösungen auch nur verhältnismäßig geringe Konzentrationen auf.

Der Erfindung liegt die Aufgabe zugrunde, ein Synthesemittel für die Lithiierung bereitzustellen, das bei erhöhten Gehalten an aktiver Verbindung nicht pyrophor und praktisch nicht hydrolyseempfindlich ist, und sich für den Einsatz in den üblicherweise in der Chemie der metallorganischen Verbindungen verwendeten Lösungsmitteln eignet, insbesondere für den Einsatz in Kohlenwasserstoffen.

Die Erfindung löst die Aufgabe, indem ein Synthesemittel der vorgenannten Art gemäß der Erfindung weiter ausgestaltet wird und das gekennzeichnet ist durch eine nicht pyrophore, rieselfähige Zusammensetzung aus

a) 15 bis 25 Gew.-% Lithiummethyl oder Lithiumethyl,

b) 35 bis 45 Gew.-% eines oder mehrerer Oxide aus der Gruppe $SiO_2$, $Al_2O_3$, CaO, sowie synthetisches wasserfreies Aluminiumsilikat,

c) 35 bis 45 Gew.-% Paraffin.

Lösungsmittelfreies Lithiummethyl und Lithiumethyl sind Festsubstanzen, die selbstentzündlich sind, was den Umgang mit diesen Verbindungen problematisch gestaltet. Zwar läßt sich, wie aus der US-A-3 087 896 bekannt ist, der pyrophore Charakter durch Mischen mit Paraffin, wie Paraffinöl oder Paraffinwachsen, unterbinden, jedoch ist hierzu ein sehr hoher und bei mindestens 60 % liegender Anteil erforderlich. Solche Produkte aus z.B. 60 % Festparaffin und 40 % Lithiummethyl führen in Reaktionsmedien, wie Alkanen, üblicherweise zu thixotropen Lösungen. Mischungen mit Paraffinölen können infolge Sedimentation zur Entmischung und damit Inhomogenität führen.

Das erfindungsgemäße Synthesemittel ist zweckmäßig eine Mischung der Zusammensetzung

a) 18 bis 22 Gew.-% Lithiummethyl oder Lithiumethyl,

b) 38 bis 42 Gew.-% eines oder mehrerer Oxide aus der Gruppe $SiO_2$, $Al_2O_3$, CaO, sowie synthetisches wasserfreies Aluminiumsilikat,

c) 38 bis 42 Gew.-% Paraffin.

Für das Synthesemittel der Erfindung ist es wesentlich, daß die Trägersubstanz inert gegen die Lithiumal-

2

kylverbindung ist. Der Gehalt an hydroxylischen Gruppen in der oxidischen Trägersubstanz soll daher nicht mehr als 5 Gew.-% betragen. Gegebenenfalls vorhandene Protonenaktivitäten der Trägersubstanz geben sich durch Gasentwicklung zu erkennen. So entwickelt sich z.B. Methan, wenn man in die Lösung des Lithiummethyls eine noch protonenaktive Trägersubstanz einträgt, wie luftfeuchte Kieselsäure.

Die Lithiumalkylverbindung, welche sich von der Herstellung her noch in der Lösung befindet, wird von der feinteiligen inerten Trägersubstanz aufgesaugt. Wenn man das Lösungsmittel entfernt, ist das feste Produkt pyrophor. Daher ist gemäß der Erfindung in der Zusammensetzung des Synthesemittels als weitere erfindungswesentliche Komponente Paraffin vorgesehen, welches die Reaktivität der Lithiumverbindung gegenüber der Athmosphäre abschirmt. Als Paraffine eignen sich feste, wachsartige und flüssige Paraffine. Um gelegentlich auftretende thixotrope Effekte in Lösungsmittelansätzen zu vermeiden, ist es zweckmäßig, in der Zusammensetzung des Synthesemittels der Erfindung Paraffinöl vorzusehen, insbesondere dickflüssiges Paraffinöl einer Dichte von 0,860 bis 0,892.

Das Synthesemittel gemäß der Erfindung ermöglicht die Verwendung von Lithiummethyl und Lithiumethyl in anderen Lösungsmitteln als in der bisher verfügbaren Form in Diethylether bzw. Hexan. Derartige andere Lösungsmittel sind gesättigte aliphatische oder cycloaliphatische $C_5$-$C_{10}$-Kohlenwasserstoffe, aromatische Kohlenwasserstoffe aus der Gruppe Benzol, Toluol, Xylol, aliphatische oder cycloaliphatische Ether aus der Gruppe Di-iso-propylether, Di-n-butylether, tert. Butylether, Tetrahydrofuran, Dioxan.

Bei Anwendung des Synthesemittels der Erfindung zur Durchführung lithiumorganischer Metallierungs- oder Alkylierungsreaktionen kann bei Bedarf das Paraffinöl vor der Synthese mit Kohlenwasserstoff-Lösungsmitteln ausgewaschen werden. Gegenüber etherischen Lösungen kann eine etwas verminderte Reaktivität auftreten, die sich jedoch durch höhere Temperaturen bzw. längere Reaktionszeiten oder durch Zusatz von Lewis-Basen (Tetrahydrofuran, Tetramethylethylendiamin) ausgleichen läßt. Vorteilhaft wirkt sich das Trägermaterial insbesondere bei der hydrolytischen Aufarbeitung der Reaktionsgemische aus. So erhält man sehr gut abtrennbare Schlämme, da überschüssiges Wasser vom Trägermaterial adsorptiv gebunden wird.

Zur Herstellung des erfindungsgemäßen Synthesemittels wird von an sich bekannten Methoden zur Herstellung von Lithiummethyl oder Lithiumethyl in Diethylether bzw. Hexan ausgegangen. Die 5 %ige etherische Lösung von Lithiummethyl oder die 2%ige Lösung von Lithiumethyl in Hexan wird unter Schutzgasatmosphäre und unter ständigem Rühren in einen Reaktor eingetragen, in welchem eine Mischung aus Paraffinöl und wasserfreiem Oxid wie $SiO_2$, $Al_2O_3$, CaO oder wasserfreiem synthetischen Aluminiumsilikat vorgelegt ist. Nach ausreichender Homogenisierung in flüssiger Phase wird die Mischung bei 40°C und vermindertem Druck von 700 mbar weitgehend von Ether befreit und anschließend bei 40°C und 10 mbar getrocknet. Das getrocknete Produkt ist krümelig-granular und rieselfähig. Selbstverständlich kann mit gleichem Erfolg auch in der Weise vorgegangen werden, daß die Lösung von Lithiummethyl oder Lithiumethyl im Reaktor unter Schutzgas vorgelegt wird und das wasserfreie Oxid und das Paraffin einzeln oder gemeinsam unter Rühren in die Vorlage eingetragen werden.

Die Vorteile des Synthesemittels der Erfindung sind darin zu sehen, daß ein pyrophorer metallorganischer Feststoff durch Zusatz von Paraffin in eine nichtpyrophore Form übergeführt und durch den weiteren Zusatz eines inerten Feststoffs das nichtpyrophore Material rieselfähig gemacht wird. Das inertisierte, nicht pyrophore, rieselfähige und lösungsmittelfreie Synthesemittel besitzt ferner eine hervorragende Eignung für Transport und Handhabung in lithiumorganischen Synthesen.

Die Erfindung wird anhand der nachstehenden Beispiele näher und beispielhaft erläutert.

Beispiel 1

In diesem Vergleichsbeispiel wird gezeigt, daß ein Produkt aus Lithiummethyl und Paraffin nicht befriedigende Eigenschaften besitzt.

200 ml einer 5 %igen Lösung von Lithiummethyl in Diethylether wurde mit 12 g Paraffinöl einer Dichte von 0,865 unter Rühren und unter Schutzgas versetzt. Die Mischung wurde nach Homogenisierung bei 40°C und 700 mbar unter stetem Rühren weitestgehend von Ether befreit und unter Weiterrühren bei 40°C und 10 mbar während ca. 60 min getrocknet. Das erhaltene Produkt der Zusammensetzung 37 Gew.-% Lithiummethyl und 63 % Paraffinöl war von bröckliger jedoch klebriger Konsistenz und zeigte keine phyrophoren Eigenschaften. Ähnliche Mischungen, in denen jedoch feste Paraffinwachse eingesetzt wurden, ergaben Produkte, die krümelig und rieselfähig waren. Der Einsatz in lithiumorganischen Synthesen führte jedoch zu Verarbeitungsschwierigkeiten, da sich thixotrope Lösungen in den Reaktionsmedien bildeten.

Beispiel 2

Zur Herstellung eines rieselfähigen, nicht pyrophoren Synthesemittels wurden 67,4 g $Al_2O_3$ (Wassergehalt

0,5 %, Korngröße 60 bis 100 μm) und 69,7 g Paraffinöl einer Dichte von 0,865 in einen kolbenförmigen Reaktor eingegeben und unter Rühren vermischt. Unter Schutzgas und unter ständigem Rühren wurden sodann 1000 ml einer 5,6 %igen Lösung von Lithiummethyl in Diethylether eingegeben. Bei der Zugabe entwickelten sich 7,3 l Methan. Die Temperatur erhöhte sich um 4°C bei einer Ausgangstemperatur von 20°C. Die erhaltene Suspension wurde bei 40°C/700 mbar und unter Schutzgasatmosphäre bei ständigem Rühren weitestgehend vom Diethylether befreit und anschließend bei 40°C/10 mbar zur Trockne während ca. 60 min eingedampft. Das nunmehr erhaltene Produkt war krümelig rieselfähig und nicht pyrophor. Bei einer Lagerung an der Luft verliert das weiße Produkt, ohne sich zu entzünden, langsam seine Aktivität und verfärbt sich nach gelb. Eine Analyse des frisch hergestellten Produkts zeigt eine Gesamtbasizität von 20,42 % und eine aktive Basizität von 16,70 %. Unter "aktiver Basizität" wird verstanden der Gehalt der Verbindung an aktivem R-Li, bestimmt nach Zerewitinow, und unter "Gesamtbasizität" der Gehalt an aktivem R-Li plus andere Lithiumbasen (Li-OR, Li-OH) gerechnet als LiOH mittels titrimetrischer Bestimmung.

Beispiel 3

Zur Herstellung eines weiteren rieselfähigen, nicht pyrophoren Synthesemittels wurden 34,1 g eines synthetischen wasserfreien Aluminiumsilikats einer Korngröße von 10 bis 60 μm und 94,1 g Paraffinöl der Dichte 0,865 in einem kolbenförmigen Reaktor unter Rühren vermischt und sodann unter Schutzgasatmosphäre mit 1000 ml einer 5,3 %igen Lösung von Lithiummethyl in Diethylether bei 20°C vermischt und homogenisiert. Die Temperaturerhöhung betrug 1°C und die Methan-Entwicklung belief sich auf 2100 ml. Die erhaltene Suspension wurde zunächst bei 40°C/700 mbar unter Aufrechterhaltung der Schutzgasatmosphäre und unter Rühren weitestgehend vom Diethylether befreit und anschließend bei 40°C/10 mbar unter stetem Rühren zur Trockne während ca. 60 min eingedampft. Das erhaltene Produkt war krümelig rieselfähig und nicht pyrophor. Eine Analyse des frisch hergestellten Produkts zeigte eine Gesamtbasizität von 22,36 % und eine aktive Basizität von 20,37 %.

Wenn in den Beispielen 2 und 3 als Trägersubstanz CaO eingesetzt wird, werden ähnliche Ergebnisse erzielt. Der jeweilige Anteil an Lithiumverbindung und Paraffinöl ergibt sich wiederum aus der Feinheit der Trägersubstanz bzw. der zur Verfügung stehenden Oberfläche. Das heißt, je größer die Oberfläche der Trägersubstanz, umso höher ist innerhalb der angegebenen Grenzen der Anteil der aufgenommenen Lithiumverbindung sowie der erforderliche Anteil an Paraffinöl. Im allgemeinen liegt der durchschnittliche Gehalt an Lithiumverbindung in der Trägersubstanz bei 20 bis 25 %.

Beispiel 4

In diesem Beispiel wird die Alkylierung von Cyclohexanon unter Verwendung des erfindungsgemäßen Synthesemittels beschrieben.

Hierzu wurde in einen Reaktor - versehen mit Tropftrichter, Rührer und Rückflußkühler - unter Stickstoffatmosphäre eine Mischung folgender Zusammensetzung, suspendiert in 400 ml n-Pentan, eingegeben:

22,9 % Methyllithium (R-Li Gehalt 340 mmol)
39,1 % Paraffinöl (Dichte 0,865)
37,9 % $Al_2O_3$ (Wassergehalt 0,5 %).

Innerhalb von 100 min wurden 360 mmol Cyclohexanon zudosiert, wobei die Temperatur auf 29°C anstieg. Das Reaktionsgemisch wurde unter Rückflußbedingungen bei 36°C noch während weiterer 2 Stunden gehalten. Anschließend wurde unter Kühlung durch Zusatz von 12 g Wasser das Reaktionsgemisch hydrolysiert. Der sich gut absetzende Niederschlag wurde abfiltriert und das Pentan hieraus abdestilliert. Im erhaltenen Rohprodukt von 60,5 g betrug das Verhältnis von Cyclohexanon zu 1-Methylcyclohexanol 9,6 : 90,4. Die Isolierung des 1-Methylcyclohexanol erfolgte durch Destillation.

**Patentansprüche**

1. Synthesemittel auf Basis einer Mischung aus lithiumorganischer Verbindung und inertem, anorganischem pulverförmigem Trägerstoff, gekennzeichnet durch eine nicht pyrophore, rieselfähige Zusammensetzung aus

a) 15 bis 25 Gew.-% Lithiummethyl oder Lithiumethyl,
b) 35 bis 45 Gew.-% eines oder mehrerer Oxide aus der Gruppe $SiO_2$, $Al_2O_3$, CaO, sowie synthetisches wasserfreies Aluminiumsilikat,
c) 35 bis 45 Gew.-% Paraffin.

2. Synthesemittel nach Anspruch 1, dadurch gekennzeichnet, daß die Mischung zusammengesetzt ist aus
a) 18 bis 22 Gew.-% Lithiummethyl oder Lithiumethyl,
b) 38 bis 42 Gew.-% eines oder mehrerer Oxide aus der Gruppe SiO$_2$, Al$_2$O$_3$, CaO, sowie synthetisches wasserfreies Aluminiumsilikat,
c) 38 bis 42 Gew.-% Paraffin.

3. Synthesemittel nach den Ansprüchen 1 bis 2, dadurch gekennzeichnet, daß der Gehalt an hydroxylischen Gruppen im Oxid nicht mehr als 5 Gew.-% beträgt.

4. Synthesemittel nach den Ansprüchen 1 bis 3, dadurch gekennzeichnet, daß Paraffinöl der Dichte 0,860 bis 0,892 verwendet wird.

5. Verwendung des Synthesemittels nach den Ansprüchen 1 bis 4 in gesättigten aliphatischen oder cycloaliphatischen C$_5$-C$_{10}$-Kohlenwasserstoffen, aromatischen Kohlenwasserstoffen aus der Gruppe Benzol, Toluol, Xylol, aliphatischen oder cycloaliphatischen Ethern aus der Gruppe Di-iso-propylether, Di-n-butylether, tert. Butylether, Tetrahydrofuran, Dioxan zur Durchführung lithiumorganischer Metallierungs- oder Alkylierungsreaktionen.


## Claims

1. A synthesis agent on the basis of a mixture of an organolithium compound and an inert, inorganic, powdered carrier, characterised by a non-pyrophoric, flowable composition of
a) 15 to 25% by weight methyl lithium or ethyl lithium,
b) 35 to 45% by weight of one or more oxides from the group SiO$_2$, Al$_2$O$_3$, CaO, and also synthetic anhydrous aluminium silicate,
c) 35 to 45% by weight paraffin.
2. A synthesis agent according to Claim 1, characterised in that the mixture is composed of
a) 18 to 22% by weight methyl lithium or ethyl lithium,
b) 38 to 42% by weight of one or more oxides from the group SiO$_2$, Al$_2$O$_3$, CaO, and also synthetic anhydrous aluminium silicate,
c) 38 to 42% by weight paraffin.
3. A synthesis agent according to Claims 1 to 2, characterised in that the content of hydroxylic groups in the oxide is not more than 5% by weight.
4. A synthesis agent according to Claims 1 to 3, characterised in that paraffin oil having a density of 0.860 to 0.892 is used.
5. Use of the synthesis agent according to Claims 1 to 4 in saturated aliphatic or cycloaliphatic C$_5$-C$_{10}$ hydrocarbons, aromatic hydrocarbons from the group benzene, toluene or xylene, aliphatic or cycloaliphatic ethers from the group di-iso-propylether, di-n-butylether, tert. butylether, tetrahydrofuran, dioxane, for carrying out organolithium metalation or alkylation reactions.


## Revendications

1. Agent de synthèse à base d'un mélange d'un composé organolithien et d'un support minéral pulvérulent inerte, caractérisé par une composition s'écoulant librement et non pyrophorique comprenant
a) 15 à 25 % en poids de méthyllithium ou d'éthyllithium,
b) 35 à 45 % en poids d'un ou plusieurs oxydes choisi(s) dans le groupe formé par SiO$_2$, Al$_2$O$_3$, CaO, ainsi que le silicate d'aluminium anhydre synthétique,
c) 35 à 45 % en poids de paraffine.
2. Agent de synthèse selon la revendication 1, caractérisé en ce que le mélange comprend
a) 10 à 22 % en poids de méthyllithium ou d'éthyllithium,
b) 30 à 42 % en poids d'un ou plusieurs oxydes choisi(s) dans le groupe formé par SiO$_2$, Al$_2$O$_3$, CaO, ainsi que le silicate d'aluminium anhydre synthétique,
c) 30 à 42 % en poids de paraffine.
3. Agent de synthèse selon les revendications 1 à 2, caractérisé en ce que la teneur en groupes hydroxyle dans l'oxyde n'est pas supérieure à 5 % en poids.
4. Agent de synthèse selon les revendications 1 à 3, caractérisé en ce qu'on utilise de l'huile de paraffine dont la densité est comprise entre 0,060 et 0,092.
5. Utilisation de l'agent de synthèse selon les revendications 1 à 4 dans des hydrocarbures en C$_{5-10}$ ali-

phatiques ou cycloaliphatiques saturés, des hydrocarbures aromatiques du groupe benzène, toluène, xylène, des éthers aliphatiques ou cycloaliphatiques du groupe éther diisopropylique, éther di-n-butylique, éther tert-butylique, tétrahydrofurane, dioxane, pour effectuer des réactions de métallation ou d'alkylation avec des organolithiens.